# EUROPEAN PATENT APPLICATION

(11) **EP 4 843 841 A1**
(43) Date of publication of application: **25.11.2026**
(21) Application number: 25177733.0
(22) Date of filing: 20.05.2025
(51) Int. Cl.: B60R 21/231, B60R 21/015, B60R 21/233, B60R 21/00

(54) **AN AIRBAG MODULE, A VEHICLE SEAT AND A VEHICLE**

(71) Applicant: Volvo Car Corporation, 405 31 Göteborg (SE)
(72) Inventor: ROSENBERG, Johan, 40531 Göteborg (SE); BRENANDER, Ellen, 40531 Göteborg (SE)
(74) Representative: Kransell & Wennborg KB

(57) **Abstract**

The disclosure relates to an airbag module (10) for a vehicle (100). The airbag module (10) comprises an inflatable airbag unit (11); and an actuator unit (C). The actuator unit (C) is configured to cause the airbag unit (11) to at least partially inflate upon detection of a side crash and/or a frontal crash of the vehicle (100). The airbag unit (11) comprises at least two independently inflatable chambers. The at least two independently inflatable chambers are at least one first chamber (11a) that is configured to be inflated upon detection of the side crash, and at least one second chamber (12a) that is configured to be inflated with the first chamber (11a) upon detection of the frontal crash.

## Description

### TECHNICAL FIELD

The present disclosure relates to an airbag module, a vehicle seat comprising an airbag module and a vehicle comprising a vehicle seat.

### BACKGROUND ART

Automobile safety systems have continuously evolved to mitigate injuries sustained by vehicle occupants in the event of a collision (in other words, crash). Airbags, which deploy upon impact to provide cushioning and reduce the likelihood of severe injury are one of the most widely implemented safety devices. Conventional airbag systems primarily focus on front-row occupants, with frontal airbags integrated into the steering wheel and dashboard, as well as airbags positioned within interior panels of vehicles. While certain advancements have extended airbag protection to rear-seat occupants, significant challenges remain in effectively safeguarding second-row occupants.

Second-row occupants often include children using child restraint systems. Some examples of second-row occupants are rear seat occupants (forward facing occupants, wherein forward denotes a driving direction) or a rearward facing child occupant (facing backwards, opposite to the forward direction) sitting at a child seat placed behind the front seat. Here, the front seat may be a driver seat as well as a passenger seat at a side of the driver seat. The second-row occupants may experience different impact dynamics compared to front-row occupants. For instance, in frontal collisions, the occupants may move toward the front seats, whereas in side-impact collisions, the occupants may be at risk from lateral forces. Existing technologies attempt to address these challenges through rear-seat frontal airbags, seat-integrated airbags, and curtain airbags extending from a vehicle roof. However, these fail to provide comprehensive protection due to limitations in deployment positioning, coverage, and ability to accommodate various occupant seating arrangements. Especially, existence of a rearward facing child and actuation of frontal airbag at a backrest of the front seat causes an extremely delicate situation.

### SUMMARY

The problem is at least partially solved or alleviated by the subject matter of the independent claims of the present disclosure, wherein further examples are incorporated in the dependent claims.

According to a first aspect, there is provided an airbag module for a vehicle. The airbag module comprises an inflatable airbag unit and an actuator unit. The actuator unit is configured to cause the airbag unit to at least partially inflate upon detection of a side crash and/or a frontal crash of the vehicle. The airbag unit comprises at least two independently inflatable chambers. The at least two independently inflatable chambers are at least one first chamber that is configured to be inflated upon detection of the side crash, and at least one second chamber that is configured to be inflated with the first chamber upon detection of the frontal crash.

The airbag module may house the airbag unit and/or the actuator unit. When the airbag module is configured to house the airbag unit and the actuator unit, they can be housed within the airbag module in connection with each other. The inflatable airbag unit may be an airbag made of a strong, preferably heat-resistant material that is configured to inflate to cushion occupants.

The actuator unit may be an inflator which contains a gas-generating compound that (rapidly) inflates the airbag. The actuator unit could be, for instance, pyrotechnical in a crash sequence or some other type prior to crash. Detection of a side crash or a frontal crash of the vehicle may trigger the deployment of the airbag unit. The trigger may be a signal received from an electronic control unit (ECU) of the vehicle, which may be in communication with at least one crash sensor. The ECU may initially detect a crash based on an input from at least one of an acceleration sensors, a gyroscope, and a crash sensor, for example, what generally is referred to as an SRS (Supplemental Restraint System) sensor. Upon detection of the frontal and/or the side crash, the ECU may assess the severity of the impact to produce the signal for actuating the actuator unit.

The first chamber (may also be referred to as a side chamber) of the two independently inflatable chambers may be inflated for an interaction with the rear seat occupant or rearward facing child occupant during the side crash. The rear seat occupant may be an adult or a child. The second chamber of the two independently inflatable chambers may be inflated with the first chamber for an interaction with the rear seat occupant during the frontal crash. The first and the second chambers may have the same size and/or shape, or they may differ from each other in size and/or shape. Considering different forces (for instance different in magnitude and/or direction) that the first chamber and the second chamber may be exposed to, the first chamber and the second chamber may be made of different materials. For instance, during the side crash, the first chamber may experience higher and more direct forces because out of both chambers it is positioned closer to a side crash zone. Whereas, during the frontal crash, the second chamber may deal with the occupant's kinetic energy, which may be filtered through seat belts and crumple zones of the vehicle. Accordingly, the first chamber may need to be deployed more rapidly (for instance, within 10-15 ms) than the second chamber, which may need to be deployed later (for instance, within 30 ms). Thus, material of the first chamber may be selected to be, for instance, nylon 6,6 fabric, preferably with a silicone or neoprene coating to increase durability against sharp intrusion, while helping to seal the airbag unit, slowing deflation and improving energy absorption. Whereas material of the second chamber may be selected to be uncoated or lightly coated nylon 6,6 fabric, which may be woven more loosely in some areas compared to the material of the first chamber (for controlled venting). Independently inflatable first and the second chambers may optimize deployment of the airbag unit that is compatible with diverse seating configurations of different types of occupants and collisions. Accordingly, effective deployment of the airbag unit for increased occupant safety can be provided.

According to an example, the airbag unit may be configured to be provided on the backrest of the front seat of the vehicle. The airbag unit may face a rear seat of the vehicle. "On the backrest" refers to the airbag unit that is provided at an outer surface of the backrest of the front seat. The backrest, also known as seatback, may refer to a back of the front seat at which the (front) seat occupant rests in a sitting position. The position of the airbag unit in the backrest of the front seat may be at the back side of the front seat that is facing the rear seat (in other words rear row, second row) of the vehicle. The front seat of the vehicle may comprise an attachment means for attaching the airbag module to its backrest.

Alternative to the previous example, the airbag unit may be configured to be provided in the backrest of the front seat of the vehicle. "In the backrest" refers to the airbag unit that is provided at an inner side of the front seat such that the airbag unit faces a rear seat of the vehicle when deployed. In this example, the airbag unit may be called a seat-integrated airbag. The airbag unit may not be visible from outside and may only become visible when deployed. The airbag unit may pass through an opening on the backrest of the front seat to inflate upon actuation by the actuator unit.

According to an example, the at least one first chamber may be configured to be inflated laterally towards a door-side of the vehicle for supporting a rearward facing child occupant or a rear seat occupant of the vehicle against the side crash of the vehicle. The first chamber may, in a deployed state, provide a cushion between the rearward facing child occupant or the rear seat occupant and a door of the vehicle towards which it deploys. The first chamber may inflate from a center of the backrest of the front seat towards the door-side which is affected by the side-impact collision. This configuration may be more advantageous over known side airbags that are provided (only) on a side of a backrest of the front seat because of its extended coverage. The first chamber may be configured to extend between the rearward facing child occupant or the rear seat occupant and the door when it is deployed.

According to an example, the at least one second chamber may be configured to support a rear seat occupant of the vehicle against the frontal crash of the vehicle upon its inflation. The second chamber may be positioned to interact with the rear seat occupant when inflated upon detection of the frontal crash. The size and/or position of the second chamber may be configured to provide a higher airbag coverage to the rear seat occupant than the first chamber for the rearward facing child occupant. For instance, the second chamber may be configured to extend sideways or laterally more than the first chamber to cover a larger area of the back side of the front seat than the first chamber when deployed. The airbag coverage may be defined as a proportion of the occupant's body surface area that comes in contact with or is shielded by the deployed airbag unit at a moment of (maximum) inflation of the airbag unit. This may be calculated as:
Airbag Coverage (%) = (Effective Contact Area of the Airbag Unit / Reference Body Surface Area) × 100. This metric may help assess how well the airbag unit distributes impact forces. In this example, as the impact forces during a frontal impact affects a larger body surface of the rear seat occupant (and possibly as the rear seat occupant may be heavier than the rearward facing child occupant), the airbag coverage of the second chamber may be configured to be higher than the first chamber.

According to an example, the at least one second chamber in addition to the at least one first chamber may be configured to support the rear seat occupant of the vehicle against the frontal crash of the vehicle upon their inflation. Upon detection of the frontal crash, the first chamber and the second chamber may be inflated together to interact with the rear seat occupant. The first and the second chambers may be inflated at the same time or one after the other (time delayed). Inflating the first and the second chambers time delayed may cause buffering (in other words, cushioning) an initial collision force exerted by the earlier inflating first or the second chamber onto the rear seat occupant. For instance, one of the first and the second chambers may be inflated, to initially interact with the rear seat occupant (at least partially engaging with the rear seat occupant). The other of the first and the second chambers may be inflated after the already inflated one of the first and the second chambers, completing the inflation of the airbag unit to fully engage with the rear seat occupant. Accordingly, the later inflating first or the second chamber may continue the interaction with a lesser force exerted onto the rear seat occupant. Accordingly, a collision energy caused by the occupant-airbag interaction can be distributed between the first and the second chambers.

In this example, the size of the second chamber may be the same or bigger than a size of the first chamber. The size may refer to an inflated state of the first chamber and the second chamber. Alternatively, the size may define an inflatable volume, particularly an inner volume, of the first and the second chambers at an uninflated state of the first and the second chambers. The inflatable volume may be defined by a surface (for instance an inner surface) of the airbag unit. The second chamber may inflate from a center of the backrest of the front seat towards the rear seat of the vehicle and/or laterally towards a side of the front seat opposite to the door side. The first chamber may inflate from the center of the backrest of the front seat towards the rear seat of the vehicle and/or laterally towards the door side. Accordingly, upon their inflation, the first and the second chambers may extend sideways (from the front seat) to increase an area of occupant interaction (the airbag coverage).

According to an example, the actuator unit may be further configured to prevent inflation of the second chamber upon receipt of a signal indicating presence of the rearward facing child occupant and upon detection of the side crash; or prevent inflation of the second chamber and the first chamber upon receipt of a signal indicating presence of the rearward facing child occupant and upon detection of the frontal crash. A seated rearward facing child occupant (in other words a child seat of the rearward facing child occupant), because of its position, may disturb or prevent inflation of the relevant first chamber and/or the second chamber. More importantly, inflation of the second chamber (with or without the first chamber) in presence of the rearward facing child occupant may endanger the rearward facing child occupant. In this case, the second chamber (with or without the first chamber) may need to be suppressed or any harmful interaction with the child occupant may need to be minimized. The signal indicating the presence of the rearward facing child occupant may be received by the actuator unit, which in return may prevent inflation of the second chamber or the second chamber with the first chamber at least under the above-mentioned conditions.

The signal may be provided by an interior sensing means, which may be configured to identify if a seating position is occupied by a forward facing-, rearward facing- or a non-seating occupant. The sensing means may be configured to scan a vehicle interior for identifying the occupant. The interior sensing means may be configured to identify a type of occupant present in the vehicle. The interior sensing means may include a camera or a sensor such as an infrared sensor. Accordingly, prevention of inflation of the second chamber or the second chamber with the first chamber upon receipt of a signal indicating presence of the rearward facing child occupant may provide an increased safety for the rearward facing child occupant.

According to the previous example, the signal may be provided to the airbag module upon detection of whether a child seat of a rearward facing child occupant is attached to the vehicle. Upon its detection, the airbag module may be configured to prevent inflation of the second chamber upon detection of the side crash; or prevent inflation of the second chamber with the first chamber upon detection of the frontal crash. A physical connection of the child seat of the rearward facing child may be detected by a sensor, for instance at a buckle unit, of the vehicle. Detection of a connection of the child seat to the vehicle may provide a certain determination that may be more reliable compared to the signal of the interior sensing means. Using both the interior sensing means and a child seat detection means may provide an even more reliable determination, and/or add redundancy to the system if one of the interior sensing means would fail.

According to an example, the airbag module may further comprise a connection element releasably connected to the second chamber. The connection element may be configured to be released for inflating the second chamber. The connection element may be provided between the second chamber and a release mechanism on the front seat. The release mechanism may be configured to release the second chamber. The release mechanism may be triggered by the actuator unit, for instance via wireless connection. Attachment of the child seat to the front seat may be configured to prevent the release of the connection element. The connection element may be a strap (or a rope) that is connected between the second chamber and, for instance, the actuator unit. Attachment of the child seat may physically or electronically prevent the release of the connection element from the second chamber. If a rearward facing child occupant is detected, deployment of the airbag unit may be restricted by the releasable connection element to only deploy the first chamber. If a rear seat occupant is detected, the connection element may be released by the actuator unit, allowing the second chamber to deploy (for instance expanding to full size) for frontal protection.

According to an example, the at least one second chamber may be configured to be inflated symmetrically to the at least one first chamber. The at least one first chamber and the at least one second chamber may be configured to leave a space therebetween when inflated. Symmetrical may mean to have a mirror view with respect to a horizontal plane passing through a center point of the airbag module. The first chamber and the second chamber may have the same size and shape, although they could also be different from each other. When deployed, the first chamber and/or the second chamber may each have an "L" shape (and a reverse "L" shape), when combined forming a "U" or a "C" shape. This may be preferred to provide a space suitable for placing the child seat between the first and the second chambers. Of course, the first and the second chambers may have any shape that is suitable for placing the child seat therebetween (preferably to allow the first and the second chambers to expand laterally and towards the rear seat). The space may be formed between the first and the second chamber when they are fully inflated.

According to an example, the inflatable airbag unit may comprise a front support member configured to extend between the at least one first chamber and the at least one second chamber when the chambers are inflated. The front support member may cover the space between the at least one first chamber and the at least one second chamber when the chambers are inflated. The front support member may be configured to support a rear seat occupant of the vehicle during the frontal crash and/or the side crash. The front support member may cover the space between the at least one first chamber and the at least one second chamber especially when the first chamber and the second chamber form a "U" or "C" shape when combined (see the above example). In this example, detection of the rearward facing child occupant may prevent the front support member from extending between the at least one first chamber and the at least one second chamber.

The front support member may be configured to cover at least 70% of a circumferential area of the space, preferably 80% of a circumferential area of the space and more preferably, 100% (full) of a circumferential area of the space to provide sufficient occupant interaction. Circumferential area may mean a plane surrounding any open sides of the space, for instance any sides not covered by the first and the second chambers and the backrest of the front seat. Accordingly, the front support member may be considered as a cover extending between the first and the second chambers (and the backrest of the front seat) to surround the space. Accordingly, the front support member may support the rear seat occupant of the vehicle during the frontal crash and/or the side crash, preventing damage to the rear seat occupant. Accordingly, the front support member may be considered to provide a cushion effect at an extended surface for the rear seat occupant during frontal collision.

According to an example, during deployment, the space may be configured to be kept pressurized to increase restraining by the front support member. In this example, the space may be completely covered (100% or fully) by the front support member to provide an enclosure. The space between the first and the second chambers (and the backrest of the front seat) may be fed with gas, for instance air. The first and/or the second chambers may, accordingly, comprise vent holes through which the gas may be supplied into the space. The supplied gas may be arranged according to the required pressure during the frontal collision. The required pressure may be determined based on the occupant detected in the vehicle. The pressure may be arranged, for instance, based on a weight and/or size of the rear seat occupant detected by the sensing means of the vehicle. For instance, deployment of the airbag unit for a rear seat child occupant may require less pressure than the deployment of the airbag unit for a rear seat adult occupant.

According to an example, at least one of the at least one first chamber and the at least one second chamber may be configured to be stored in or on the backrest of the front seat of the vehicle in a rolled form and/or in a folded form. The first chamber and the second chamber may have a shape suitable for folding into at least two layers and/or for rolling (for instance around its tip portion) for reducing a size thereof during storage (before deployment). Both of the first and the second chambers may be folded, for instance on top of each other for an easier storage inside a housing of the airbag module. Further, the folded second chamber may support inflation of the first chamber while deployment, in particular by pushing the first chamber folded on the second chamber outwardly. Rollable or foldable form of the first and the second chambers may provide easy storage. This may allow the housing of the airbag module to have a smaller size, making it easy to transfer and locate on the backrest of the front seat of the vehicle.

The first chamber and the second chamber may be configured to be deployed simultaneously or one of the first and second chambers may be configured to be deployed time-delayed one after the other. This can be called a multi-staged deployment.

According to an example, the at least one first chamber may be configured to be stored in or on the backrest of the front seat of the vehicle in a rolled form and the at least one second chamber may be configured to be stored in or on the backrest of the front seat of the vehicle in a folded form. Simultaneous deployment of the folded and rolled first and second chambers may be more advantageous over both folded or both rolled first and second chambers. During deployment of the folded first or the second chamber, the rolled other of the first and the second chamber may be deployed without any intervention of the folded first or the second chamber. Accordingly, a fast deployment of the airbag unit may be provided.

According to a second aspect, there is provided a vehicle seat comprising an airbag module. The vehicle seat is a front seat of the vehicle and the airbag module is provided in or on a backrest of the front seat.

According to an example of the second aspect, the front seat may comprise a release element for allowing the inflation of the airbag unit towards the rear seat upon detection of the frontal crash. The release element may be an opening on the backrest of the front seat facing the rear seat. The actuator unit may inflate the first and/or the second chamber of the airbag unit to pass through the opening on the backrest towards the rear seat for interacting with the rearward facing child occupant or the rear seat occupant.

According to a third aspect, there is provided a vehicle comprising a vehicle seat according to the second aspect. The vehicle comprises at least one sensor unit for detecting a side crash and/or a frontal crash of the vehicle. The at least one sensor unit of the vehicle is further configured to detect an occupant within the vehicle. The sensor unit is configured to detect the occupant when the occupant is a rearward facing child occupant or a rear seat occupant. Upon detection of the side and/or the frontal crash and the rearward facing child occupant or the rear seat occupant, the sensor unit may communicate with the actuator unit for it to cause inflation of a first chamber or the first chamber with the second chamber (relevant airbag unit). The sensor unit may, for instance, provide a signal to the actuator unit to invoke the inflation of the relevant airbag unit.

According to a fourth aspect, there may be provided a method for deploying an airbag module according to the first aspect. The method may comprise:
- identifying a type of crash of the vehicle;
- identifying a type of occupant within the vehicle;
- deploying at least one of a first chamber and a second chamber according to the type of the crash of the vehicle and the type of the occupant within the vehicle.

According to an example of the fourth aspect, the method may further identify a type of the vehicle. By identifying the type of the vehicle, the method may adjust a deployment characteristic of the first and the second chambers of the airbag module. For instance, the deployment characteristic may be a timing, pressure and/or duration of inflation of the first and the second chambers. In addition to these, the method may also detect presence of a seat belt usage of the back seat occupant and/or the rearwards facing child occupant. Accordingly, a better customized method for deploying an airbag module may be provided.

The method may be at least partly computer-implemented, and may be implemented in software or in hardware, or in software and hardware. Further, the method may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

It should be noted that the above examples may be combined with each other irrespective of the aspect involved. Accordingly, the method may be combined with structural features and, likewise, the apparatus and the system may be combined with features described above with regard to the method.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figures 1A and 1B: show a sideview of a section of a vehicle comprising an airbag module on a backrest of a front seat of the vehicle according to the prior art.
- Figures 2A-2C: show a perspective view and a top-down view of alternative embodiments of a front seat of a vehicle according to the present disclosure. A rear seat occupant is provided in Figure 2A and a rearward facing child occupant is shown seated in Figures 2B and 2C.
- Figures 3A and 3B: show a sideview of a section of a vehicle comprising an airbag module on a backrest of a front seat of a vehicle according to the present disclosure, and the section of the vehicle from a back-to-front view. A rearward facing child occupant is shown seated in Figures 3A and 3B.
- Figures 4A-4C: show top-down view of a front seat of a vehicle comprising an airbag module on a backrest according to the present disclosure. The airbag module is being deployed in Figure 4B. A rear seat occupant is shown in Figure 4C in front of the deployed airbag module.
- Figures 5A-5C: show a top-down view of a front seat of a vehicle comprising an airbag module on a backrest of the front seat according to the present disclosure. The airbag module is being deployed in Figure 5B against a side crash. A rearward facing child occupant is shown in Figure 5C in front of the deployed airbag module.
- Figures 6A-6C: show a top-down view of a front seat of a vehicle comprising an airbag module in a backrest according to the present disclosure. Figures 6A-6C show storage alternatives of an airbag unit of the airbag module.

### DETAILED DESCRIPTION

The Figures are merely schematic representations and serve only to illustrate examples of the disclosure. Identical or equivalent elements are in principle provided with the same reference signs.

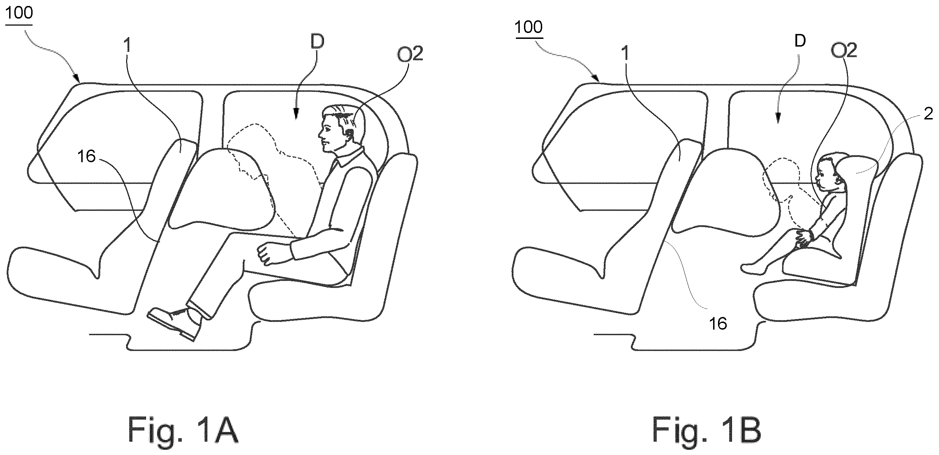

Figures 1A and 1B show a sideview of a section of a vehicle 100 comprising an airbag module on a backrest 16 of a front seat 1 of the vehicle 100 according to the prior art. The vehicle 100 comprises a front seat 1 at a front side of the vehicle 100 and a rear seat at a rear side of the vehicle 100. The rear seat is at a rear side of the front seat 1 in a forward direction. The vehicle 100 shown in Figures 1A and 1B comprises two doors, one front door opening to the front seat 1 and one rear door opening to the rear seat. Door side D is shown at the rear side of the vehicle 100. The door side D is beside the rear seat in a direction of the rear door of the vehicle 100. A rear seat occupant O2 in an adult form and sitting at the rear seat is shown in Figure 1A and a rear seat occupant O2 in a child form sitting in a child seat 2 is shown in Figure 1B. The airbag unit according to the prior art is inflating towards the rear seat occupant O2 of the vehicle 100 in both Figures 1A and 1B. In Figure 1A and 1B a solution for a rearward facing child occupant O1 is not shown. Further, in Figures 1A and 1B a solution for a rear seat occupant O2 against a side collusion of the vehicle 100 is also not shown.

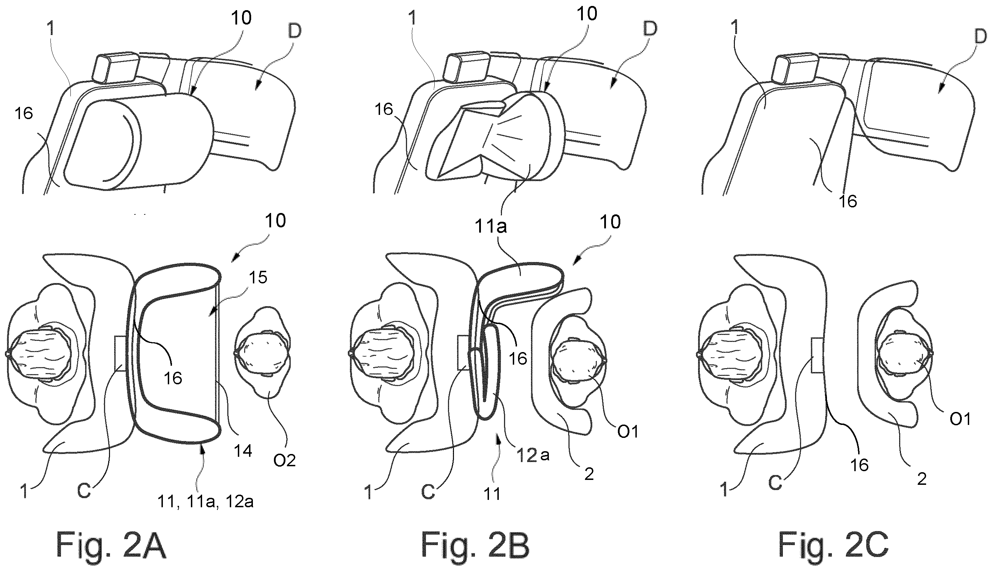

Figures 2A-2C show perspective views and top-down views of alternative embodiments of a front seat 1 of a vehicle 100 according to the present disclosure. A rear seat occupant O2 is provided in Figure 2A (shown at the bottom) and a rearward facing child occupant O1 is provided in Figures 2B and 2C (shown at the bottom). The perspective views of the front seat 1 at the top show a detailed view of the front seat 1 of the embodiments at the bottom. The front seat 1 comprises an airbag module 10 according to the present disclosure. As shown in Figures 2A and 2B at the bottom, the airbag module 10 comprises an inflatable airbag unit 11 and an actuator unit C. The actuator unit C is configured to cause the airbag unit 11 to at least partially inflate upon detection of a side crash and/or a frontal crash of the vehicle 100. In Figure 2C the airbag unit 11 is not shown.

In Figure 2A, the airbag unit 11 comprises at least two independently inflatable chambers 11a, 12a. The at least two independently inflatable chambers are at least one first chamber 11a that is configured to be inflated upon detection of the side crash, and at least one second chamber 12a that is configured to be inflated with the first chamber 11a upon detection of the frontal crash. In Figure 2A the first and the second chambers 11a, 12a are depicted as a single chamber.

In Figure 2A, upon detection of the frontal crash, the actuator unit C causes the first chamber 11a and the second chamber 12a to inflate for protection of the rear seat occupant O2. Figure 2A shows the airbag unit 11 after being inflated. The airbag unit 11 is provided on the backrest 16 of the front seat 1 of the vehicle 100 such that the airbag unit 11 faces the rear seat (and the rear seat occupant O2) of the vehicle 100 (when deployed). The airbag unit 11 (more specifically, the first chamber 11a and the second chamber 12a) form a U shape after deployment. There is a space 15 between the first and the second chambers 11a, 12a (between the legs of the U shape) when inflated. The first chamber 11a and the second chamber 12a have the same size and are symmetric to each other. The airbag unit 11 comprises a front support member 14 extending between the first chamber 11a and the second chamber 12a after deployment (as shown in Figure 2a). The rear seat occupant O2 is arranged centrally to the airbag module 10.

In Figure 2B, upon detection of the side crash, the actuator unit C causes the first chamber 11a to inflate for protection of the rearward facing child occupant O1 from a side crash. Figure 2B shows the first chamber 11a of the airbag unit 11 after being inflated. The first chamber 11a is inflated laterally towards the door-side D. When inflated, the first chamber 11a is provided between the rearward facing child occupant O1 and the rear door of the vehicle 100 (towards the door side D). The second chamber 12a remains in position (for instance inside a housing of the airbag module 10 that is not shown in Figure 2B). The second chamber 12a is in a folded form. The first chamber 11a is depicted not to extend towards the rearward facing child occupant O1 but in other embodiments that are not depicted in the Figures, the first chamber 11a may extend to interact with the rearward facing child occupant O1 directly.

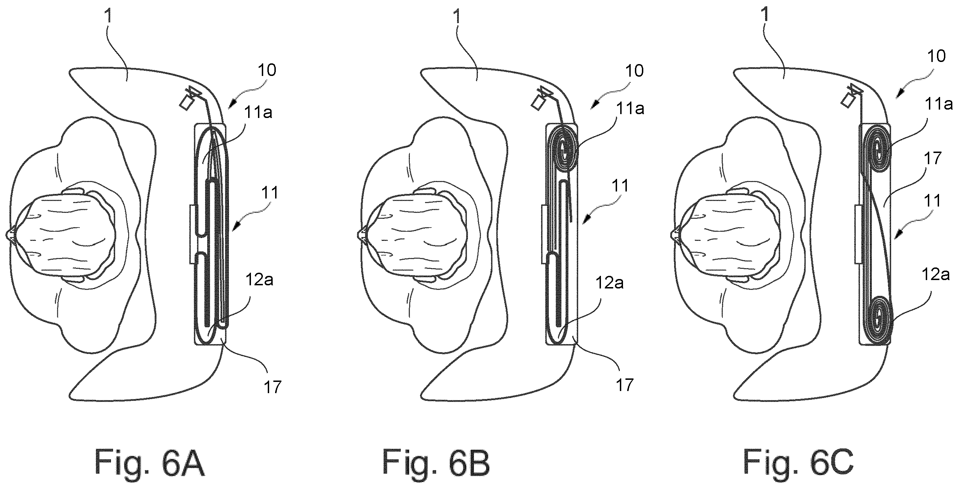

In Figure 2C, the airbag unit (not shown) is provided in the backrest 16 of the front seat 1 of the vehicle. The airbag unit is not visible, since in Figure 2C the airbag unit is not deployed. How the airbag unit is stored in the backrest 16 of the front seat 1 is disclosed more in detail in Figures 6A to 6C. In this embodiment, upon detection of the frontal crash, the airbag unit is prevented from deploying in order not to endanger the rearward facing child occupant O1. The actuator unit C is configured to prevent inflation of the second chamber or the second chamber with the first chamber upon receipt of a signal indicating the presence of the rearward facing child occupant O1 and upon detection of the frontal crash.

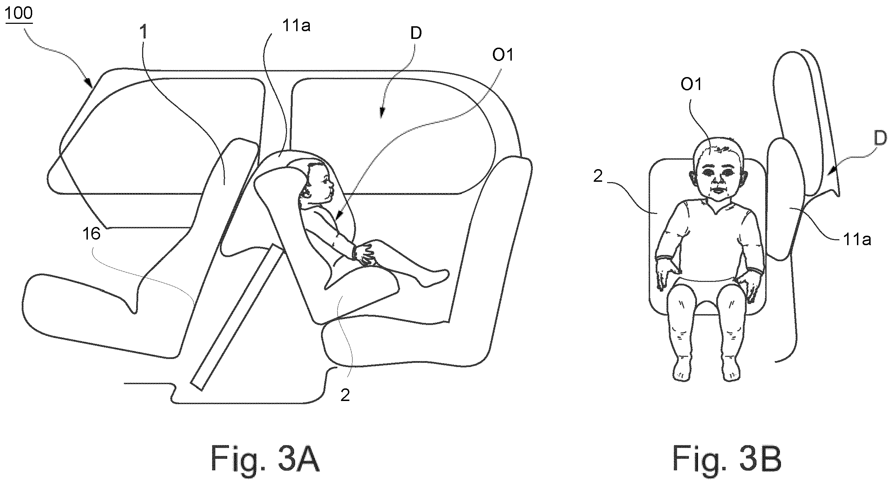

Figures 3A and 3B show a section of a vehicle 100 comprising an airbag module 10 (now shown) on a backrest 16 of a front seat 1 of a vehicle 100 according to the present disclosure. Figure 3A shows the section from a sideview and Figure 3B shows the section from a back-to-front view (from a rear side of the vehicle towards a front side of the vehicle). A rearward facing child occupant O1 is provided in Figures 3A and 3B. The rearward facing child occupant O1 is sitting in a child seat 2. Figure 3A shows an example of attaching the child seat 2 at the backrest 16 of the front seat 1. The first chamber 11a is inflated upon detection of a side crash. The first chamber 11a extends between the child seat 2 of the rearward facing child occupant O1 and the door side D of the rear door of the vehicle 100 at the inflated position. The connection of the first chamber 11a to the backrest 16 of the front seat 1 is not shown in Figures 3A and 3B. Although Figure 3A shows the child seat 2 on the backseat of the vehicle, the child seat 2 may be also directly attached to the backrest 16 of the front seat 1 of the vehicle 100.

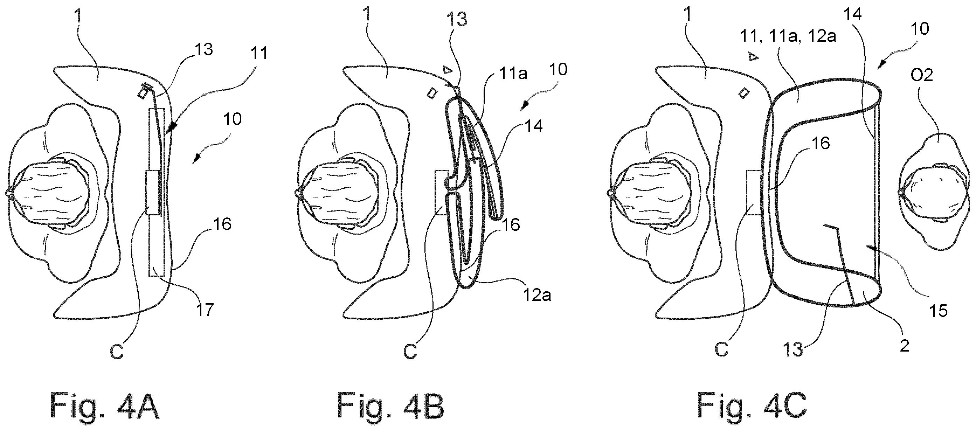

Figures 4A-4C show top-down view of a front seat 1 of a vehicle 100 comprising an airbag module 10 on a backrest 16 of the front seat 1 according to the invention. In Figure 4A, the airbag unit 11 is provided inside the housing 17 in the backrest 16 of the front seat 1, whereas in Figures 4B and 4C, the airbag unit 11 has been released from the housing (not shown). In Figure 4A, the actuator unit C has not caused inflation of the airbag unit 11. In Figure 4B, the airbag module 10 comprises a connection element 13 connected to the second chamber 12a. The connection element 13 is configured to be released for inflating the second chamber 12a (second chamber in inflated state is shown in Figure 4C). When connected to the second chamber 12a, the connection element 13 prevents deployment of the second chamber 12a.

Figure 4B shows initiation of deployment of the first and the second chambers 11a, 12a upon detection of the frontal crash. In Figure 4B, no rearward facing child occupant is provided and thereby, no rearward facing child occupant is detected. The frontal crash has been detected. The connection element 13 is released, thereby allowing deployment of the second chamber 12a (in addition to the first chamber 11a).

A rear seat occupant O2 is shown in Figure 4C. The rear seat occupant O2 is shown in front of the deployed airbag module 10 upon detection of the frontal crash. The first chamber 11a and the second chamber 12a of the airbag unit 11 is shown as a single airbag unit 11. The front support member 14 is extending between the deployed first chamber 11a and the second chamber 12a of the airbag unit 11 for interaction with the rear seat occupant O2.

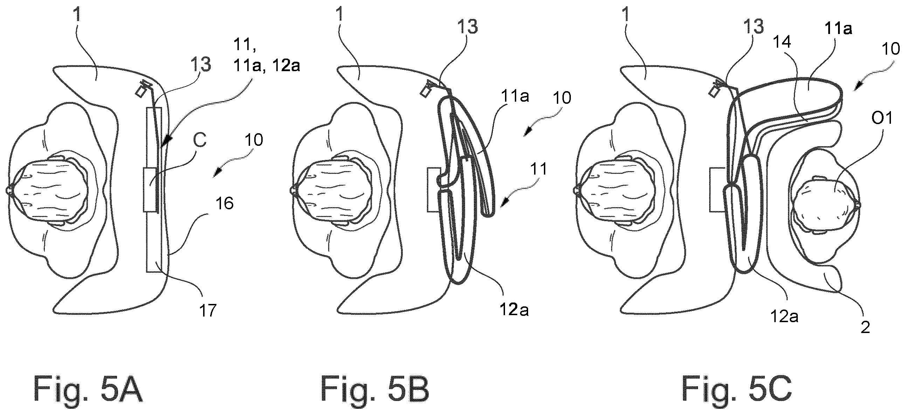

Figures 5A-5C show top-down view of a front seat 1 of a vehicle comprising an airbag module 10 on a backrest 16 of the front seat 1 according to the invention. Figures 5A-5C show deployment phases of an airbag unit 11 of the airbag module 10 when a rearward facing child occupant O1 is provided.

In Figure 5A the airbag unit 11 is not yet inflated, or caused to inflate. Accordingly, the airbag unit 11 is provided inside the housing 17 of the airbag module 10. The airbag module 10 comprises the actuator unit C and the connection element 13 connecting the actuator unit C to the second chamber 12a (the second chamber is shown in Figure 5B and the exact connection to the second chamber 12a is not shown).

In Figure 5B, the first chamber 11a starts to deploy. The first chamber 11a and the second chamber 12a are folded onto each other. The first chamber 11a is folded on the second chamber 12a. Upon detection of a side crash, the first chamber 11a inflates laterally to the side of the child seat 2 of the rearward facing child occupant O1, which is shown in Figure 5C. In Figure 5C, the first chamber 11a is fully inflated to protect against the detected side crash. The child seat 2 of the rearward facing child occupant O1 is provided next to the deployed first chamber 11a. As shown in Figure 5C, attachment of the child seat 2 to the front seat 1 prevents the release of the connection element 13 from the second chamber 12a, thereby preventing deployment of the second chamber 12a.

Figures 6A-6C show top-down views of a front seat 1 of a vehicle (not shown) comprising an airbag module 10 at the front seat 1 according to the present disclosure. Figures 6A-6C show storage alternatives of an airbag unit 11 of the airbag module 10. In Figure 6A, the first chamber 11a and the second chamber 12a are stored in the housing 17 at the backrest 16 of the front seat 1 of the vehicle. The first and the second chambers 11a, 12a are not visible from outside when they are not deployed (as is the case in Figure 6A).

In Figure 6A, the first and the second chambers 11a, 12a are in folded form. In Figure 6A the first chamber 11a and the second chamber 12a are folded into two layers and an outer layer of the first chamber 11a is folded on an outer layer of the second chamber 12a. In Figure 6B, the first chamber 11a is in rolled form and the second chamber 12a is in folded form. In Figure 6C the first chamber 11a and the second chamber 12a are in rolled form. The rolled chambers shown in Figured 6B and 6C are rolled from their tip (end) portions towards a center of the airbag module 10. In Figure 6C, the first and the second chambers 11a, 12a are rolled from their tip portions on opposite ends of the respective first and second chambers 11a, 12a.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

The term "full", "fully", "complete", "completely" may contain tolerances due to technical reasons Similarly, the term "same" referring to various measures such as size, time or shape may refer to values that are not exactly the same but containing tolerances due to manufacturing restrictions, assembly restrictions or other restrictions.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. Any reference signs in the claims should not be construed as limiting the scope of the claims.

### LIST OF REFERENCE SIGNS

- 100: Vehicle
- 1: Front seat
- 2: Child seat
- 10: Airbag module
- 11: Airbag unit
- 11a: First chamber
- 12a: Second chamber
- 13: Connection element
- 14: Front support member
- 15: Space
- 16: Backrest
- 17: Housing
- C: Actuator unit
- D: Door side
- O1: Rearward facing child occupant
- O2: Rear seat occupant

## Claims

1. An airbag module (10) for a vehicle (100), the airbag module (10) comprising:
- an inflatable airbag unit (11); and
- an actuator unit (C);
wherein the actuator unit (C) is configured to cause the airbag unit (11) to at least partially inflate upon detection of a side crash and/or a frontal crash of the vehicle (100);
wherein the airbag unit (11) comprises at least two independently inflatable chambers; wherein the at least two independently inflatable chambers are at least one first chamber (11a) that is configured to be inflated upon detection of the side crash, and at least one second chamber (12a) that is configured to be inflated with the first chamber (11a) upon detection of the frontal crash.

2. The airbag module (10) according to claim 1, wherein the airbag unit (11) is configured to be provided in or on a backrest (16) of a front seat (1) of the vehicle (100).

3. The airbag module (10) according to any one of the previous claims, wherein the at least one first chamber (11a) is configured to be inflated laterally towards a door-side (D) of the vehicle (100) for supporting a rearward facing child occupant (O1) or a rear seat occupant (O2) of the vehicle (100) against the side crash of the vehicle (100).

4. The airbag module (10) according to any one of the previous claims, wherein the at least one second chamber (12a) is configured to support a rear seat occupant (O2) of the vehicle (100) against the frontal crash of the vehicle (100) upon its inflation.

5. The airbag module (10) according to any one of the previous claim, wherein the at least one second chamber (12a) in addition to the at least one first chamber (11a) is configured to support the rear seat occupant (O2) of the vehicle (100) against the frontal crash of the vehicle (100) upon their inflation.

6. The airbag module (10) according to claim 3, wherein the actuator unit (C) is further configured to:
- prevent inflation of the second chamber (12a) upon receipt of a signal indicating presence of the rearward facing child occupant (O1) and upon detection of the side crash; or
- prevent inflation of the second chamber (12a) and the first chamber (11a) upon receipt of a signal indicating presence of the rearward facing child occupant (O1) and upon detection of the frontal crash.

7. The airbag module (10) according to the previous claim, wherein the signal is provided to the airbag module (10) upon detection of whether a child seat (2) of a rearward facing child occupant (O1) is attached to the vehicle.

8. The airbag module (10) according to the previous claim, further comprising a connection element (13) releasably connected to the second chamber (12a), wherein the connection element (13) is configured to be released for inflating the second chamber (12a), wherein attachment of the child seat (2) is configured to prevent the release of the connection element (13).

9. The airbag module (10) according to the previous claim, wherein the at least one second chamber (12a) is configured to be inflated symmetrically to the at least one first chamber (11a), the at least one first chamber (11a) and the at least one second chamber (12a) being configured to leave a space (15) therebetween when inflated.

10. The airbag module (10) according to the previous claim, wherein the inflatable airbag unit (11) comprises a front support member (14) configured to extend between the at least one first chamber (11a) and the at least one second chamber (12a) when the chambers (11a, 12a) are inflated, the front support member (14) covering the space (15) between the at least one first chamber (11a) and the at least one second chamber (12a), the front support member (14) being configured to support a rear seat occupant (O2) of the vehicle (100) during the frontal crash and/or the side crash.

11. The airbag module (10) according to the previous claim, wherein during deployment, the space (15) is configured to be kept pressurized to increase restraining by the front support member (14).

12. The airbag module (10) according to any one of the previous claims, wherein at least one of the at least one first chamber (11a) and the at least one second chamber (12a) is configured to be stored in or on the backrest (16) of the front seat (1) of the vehicle (100) in a rolled form and/or in a folded form.

13. The airbag module (10) according to the previous claim, wherein the at least one first chamber (11a) is configured to be stored in or on the backrest (16) of the front seat (1) of the vehicle (100) in a rolled form and the at least one second chamber (12a) is configured to be stored in or on the backrest (16) of the front seat (1) of the vehicle (100) in a folded form.

14. A vehicle seat comprising an airbag module (10) according to any one of the previous claims, wherein the vehicle seat is a front seat (1) of the vehicle and the airbag module (10) is provided in or on a backrest (16) of the front seat (1).

15. A vehicle (100) comprising a vehicle seat according to claim 14, wherein the vehicle (100) comprises at least one sensor unit for detecting a side crash and/or a frontal crash of the vehicle (100) and an occupant within the vehicle (100), wherein the occupant is a rearward facing child occupant (O1) or a rear seat occupant (O2).
